Europäisches Patentamt

European Patent Office

Office européen des brevets

(11) Publication number: **0 332 414**
A2

# EUROPEAN PATENT APPLICATION

(21) Application number: **89302293.9**

(22) Date of filing: **08.03.89**

(51) Int. Cl.⁴: **F 16 H 37/08**
**F 16 H 15/54**

(30) Priority: **08.03.88 JP 52505/88**
**08.03.88 JP 52506/88**

(43) Date of publication of application:
**13.09.89 Bulletin 89/37**

(84) Designated Contracting States:
**AT BE DE FR GB IT NL SE**

(71) Applicant: **BRIDGESTONE CYCLE CO., LTD.**
**No. 5-14, 3-chome, Nihonbashi**
**Chuo-Ku Tokyo (JP)**

(72) Inventor: **Takamiya, Kikuzo**
**33 Azuma 3-chome**
**Kitamoto City Saitama Pref. (JP)**

**Tamura, Yoshitaka**
**1214 Maguchi Ohtone-Machi**
**Kitasaitama-Gun Saitama Pref. (JP)**

Shibayama, Yoichi
10-2 Asamadai 4-chome
Ageo City Saitama Pref. (JP)

Nishimura, Ritsuo
20-6 Uchiya 5-chome
Urawa City Saitama Pref. (JP)

Hirai, Kiyofumi
10-2 Asamadai 4-chome
Ageo City Saitama Pref. (JP)

Serizawa, Hiromitsu
10-2 Asamadai 4-chome
Ageo City Saitama Pref. (JP)

(74) Representative: **Senior, Alan Murray et al**
**J.A. KEMP & CO 14 South Square Gray's Inn**
**London WC1R 5EU (GB)**

(54) Stepless speed change device.

(57) A stepless speed change device has input shaft and an output shaft. The device includes a planetary carrier provided at an inner end of the input shaft, a sun gear provided at an inner end of the output shaft to be in mesh with planet gears carried on the planetary carrier, and an internal gear in mesh with the planet gears to form a planetary gear. The device further includes a driven rotor rotatable about the input shaft and in the form of a hollow cylinder having flanges at both ends and concentrically connected to the internal gear, a driving rotor enclosing the driven rotor and including two members connected to the input shaft on both sides of the driven rotor, and in intermediate friction transmission ring whose eccentricity is adjustable and which is interposed between the flanges of the driven rotor and between the two members of the driving rotor for transmitting rotating power therebetween.

FIG. 1

EP 0 332 414 A2

**Description**

## STEPLESS SPEED CHANGE DEVICE

This invention relates to a stepless speed change device for general purpose suitable for use in industrial machines, transportation facilities and the like.

In general, stepwise speed change devices have disadvantages in that shocks occur when the speeds are changed stepwise and optimum speeds are often difficult to obtain because only particular speed ratios are available.

A stepless speed change device eliminates these disadvantages. Mechanical stepless speed change devices that have been used are mostly of the friction wheel type. One example is that disclosed in Japanese Utility Model Application Publication No. 49-29,168.

With such a friction wheel type device, stepless speed change is accomplished by stepless changing of the radii of contacting points between conical wheels which form a friction transmission. However, the surfaces of the conical wheels in contact with each other are wide and belt-like and lie along pitch lines due to Hertz stresses. As a result, positive and negative slips occur on the larger and smaller diameter sides of the contacting surface, which results in internal friction losses and lower transmission efficiency.

Moreover, when the transmission ratio is at a maximum or a minimum, the positive and negative slips increase rapidly because the ratio of the diameters of the driving and driven friction wheels at the points of contact is fairly large, for example between 1:2 and 1:4. Therefore, the transmission efficiency is considerably reduced in the highest and lowest speed ranges.

It is a primary aim of the present invention to provide an improved stepless speed change device which alleviates the disadvantages of the prior art and which is operated with high efficiency even at speed ranges other than the fastest and lowest speed ranges and is simple in construction, easy to manufacture and small and light.

According to the invention there is provided a stepless speed change device having an input shaft and an output shaft, said device comprising a planetary gear set comprising carrier provided at an inner end of said input shaft, a sun gear provided at an inner end of said output shaft meshing with planet gears carried on the planetary carrier, and an internal gear meshing with the planet gears, a driven roror rotatable about said input shaft and in the form of a hollow cylinder having flanges at both ends and concentrically connected to said internal gear, a driving rotor enclosing said driven rotor and including two members connected to said input shaft on both sides of said driven rotor, and an intermediate friction transmission ring interposed between said flanges of the driven rotor and between said two members of the driving rotor for transmission rotating power therebetween, the eccentricity of the intermediate friction transmission gear being adjustable to vary the speed of rotation of the driven rotor relative to that of the driving rotor to vary the speed ratio between the input shaft and the output shaft.

In an embodiment of the invention, the eccentricity of the intermediate friction transmission ring is adjusted by an eccentric ring which is fitted in a casing of the device and encircling the intermediate friction transmission ring.

In another embodiment, the eccentricity is adjusted by two sets of guide rollers in contact with the intermediate friction transmission ring.

As described above, according to the present invention the intermediate friction transmission is adjustable in its eccentricity relative to the input shaft, is provided between the driving rotor, which is formed by two members, and is rotatable together with the input shaft and the driven rotor rotatably provided on the input shaft without using conical wheels for friction transmission. The friction transmission is accomplished by the engagements of these members. In the fastest speed ranges, particularly, the driving and driven rotors concentrically contact the intermediate friction transmission ring so that these members are in contact with each other with all circumferences, with the result that very high transmission efficiency approximately 100% can be obtained without slipping.

Moreover, even in speed ranges other than the fastest speed range, where the intermediate friction transmission ring is eccentric to the input shaft so that the driving and driven rotors are partially in contact with the intermediate friction transmission, the ratios of pitch line diameters of the rotors at friction transmission contacting points are nearer 1 (one) than 1:2 in the prior art. Therefore, the friction transmission contacting lines are fairly long on the pitch lines and the positive and negative slip zones are narrower than those in the prior art, so that much higher transmission efficiency can be obtained in speed ranges other than the fastest ranges.

Preferred exemplary embodiments will be described hereinafter with reference to the accompanying drawings in which

Fig. 1 is a longitudinal sectional view of a stepless speed change device of a first embodiment of the invention;

Fig. 2 is a front elevation of the device viewed from an input side;

Fig. 3 is a partial sectional view taken along the line III-III in Fig. 1;

Fig. 4 is a sectional view illustrating the maximum eccentric condition of the intermediate friction transmission ring in Fig. 3;

Fig. 5 is a plan view illustrating part of the device of the embodiment in section taken along the line V - V in Fig. 4;

Fig. 6 is a partial sectional view of the device taken along the line VI-VI in Fig. 1;

Fig. 7 is a longitudinal sectional view of a stepless speed change device of another embodiment of the invention taken along the line **VII-VII** in Fig. 8:

Fig. 8 is a front elevation of the device, partially removed, viewed from an output side;

Fig. 9 is a view for explaining the operation of the device in operation of a handle;

Fig. 10 is a side view showing the intermediate friction transmission ring of the device in Fig. 7 under its concentric condition;

Fig. 11 is a partially removed front elevation of the intermediate friction transmission ring under the condition shown in Fig. 10; and

Fig. 12 is a parital sectional view taken along the line XII-Xii in Fig. 7.

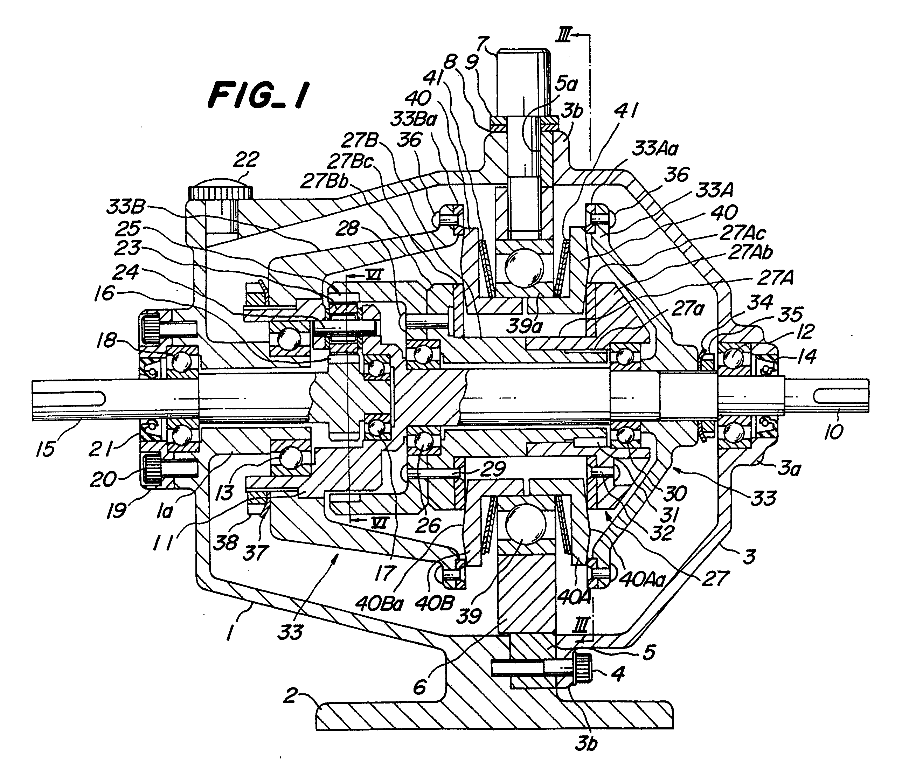

Figs. 1 to 6 illustrate a first embodiment of the invention. In the drawings, the stepless speed change device comprises a casing 1 substantially in the form of a hollow cylinder which is open on an input side and has a boss 1a on an output side for a shaft to pass through. The casing 1 has an integrally formed base 2 and is covered by a casing cover 3 which is clamped to the casing 1 by means of bolts 4. The casing cover 3 has a boss 3a on an input side for an input shaft to pass through, and a flange 3b for clamping the casing cover 3 to the casing 1.

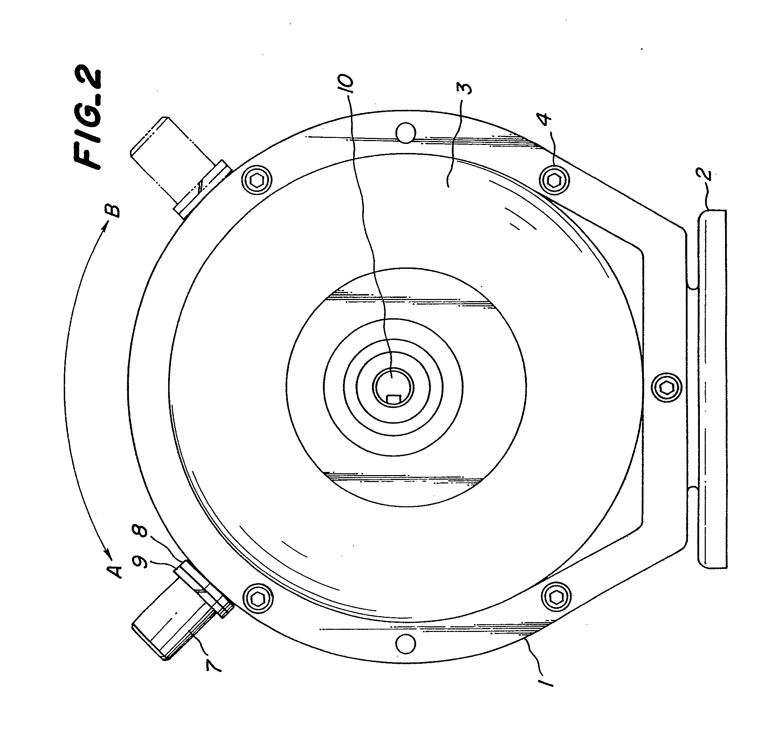

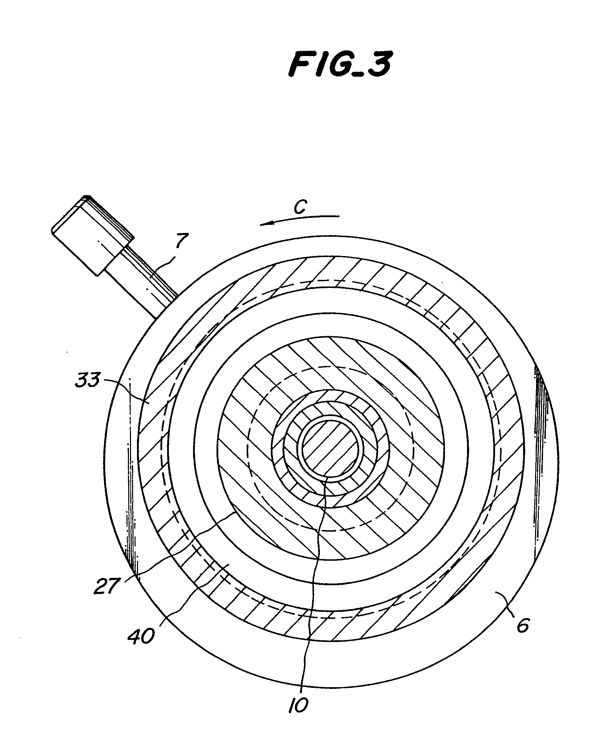

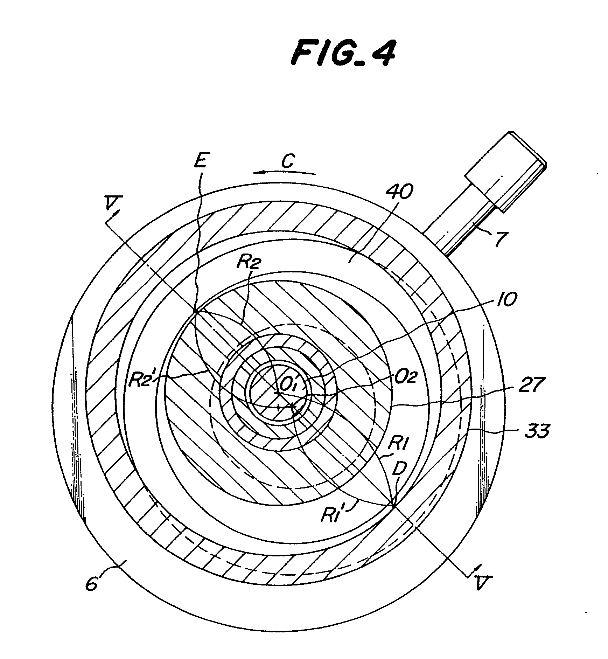

A guide ring 5 is also secured to the casing 1 by means of the bolt 4. An eccentric control ring 6 having an eccentric inner aperture (Figs. 3 and 4) is rotatable on an inner circumferential surface of the guide ring 5. A handle 7 is threadedly secured to the eccentric ring 6. The handle 7 extends outside the casing 1 and is movable through about 90° as shown by arrows A and B in Fig. 2. A notch 5a is formed in the guide ring 5 to allow the rotational movement of the handle 7. Washers 8 and 9 are fitted about the handle 7.

An input shaft 10 is formed integrally with a planetary carrier 11 and is rotatably supported on its input side by a bearing 12 fitted in the boss 3a of the casing cover 3 and on the planetary carrier side by a bearing 13 fitted in the boss 1a of the casing 1. Reference numeral 14 shows an oil seal.

An output shaft 15 has a sun gear 16 formed integrally on its input side. The output shaft 15 is supported at its input end by a bearing 17 in the main part of the planetary carrier 11 and at its output end by a bearing 18 in the casing 1. The bearing 18 is retained in the casing by a bearing retainer 19 having an oil seal 21. Reference numeral 22 denotes an oil cap.

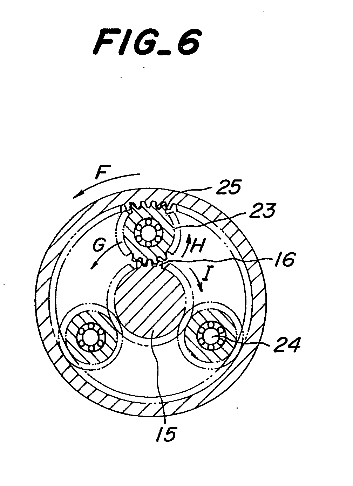

A plurality (three in the embodiment as shown in Fig. 6) of planet gears 23 are rotatably supported on the planetary carrier 11 by means of shafts 24 so as to mesh with the sun gear 16. An internally toothed gear 25 is rotatably supported by the input shaft 10 through a bearing 26 to mesh with the planet gears 23.

Moreover, a driven rotor 27, in the form of a hollow cylinder with flanges at its ends, is connected to the internal gear 25 by rivets 28 and 29 and is supported by bearings 26 and 30 so as to be rotatable about the input shaft 10.

In this embodiment, the driven rotor 27 is formed from two separate members, an input side driven rotating member 27A and an output side driven rotating member 27A. These driven rotating member 27A and 27B are threaded together at 27a and fixed against rotation by means of a key pin 31. The driven rotating members are formed with flanges 27Ab and 27Bb, respectively. Friction plates 27Ac and 27Bc are fixed to insides of the flanges 27Ab and 27Bb by means of rivets 32 and 29, respectively.

A driving rotor 33 is formed by two members 33A and 33B fixed to the input shaft 10 and the planetary carrier 11, respectively, which surround the driven rotor 27 on both sides.

In more detail, the input side driving rotating member 33A, substantially in the form of a dish, is fixed to the input shaft 10 by means of a washer 34 and a nut 35 and is provided with a friction plate 33Aa fixed to the inside of its outer periphery by means of rivets 36.

Moreover, the output side driving rotating member 33B, substantially in the form of a cup, is fixed to the planetary carrier 11 by means of a washer 37 and a nut 38 and is provided with a friction plate 33Ba fixed to the inside of its outer periphery by means of rivets 36.

A ball bearing 39 is fitted in the eccentric ring 6. An intermediate friction transmission ring 40 is fitted in the bearing 39 between the friction plates 27Ac and 27Bc, which are provided on the flanges 27Ab and 27Bb of the driven rotor 27, and between the friction plates 33Aa and 33Ba, which are provided on the insides of the outer peripheries of the driving rotor 33, in a manner to transmit rotation between the driving and driven rotors 33 and 27.

As shown in Fig. 1, the intermediate friction transmission ring 40 comprises an input side ring 40a and an output side ring 40B having L-shaped cross-sections. Outer surfaces 40Aa and 40Ba of the rings 40A and 40B have a section in the form of a gently sloping roof. Initially coned disc springs or Belleville springs 41 are interposed between an inner race 39a of the bearing 39 and the rings 40A and 40B.

Each of the input and output side rings 40A and 40B is L-shaped in section having a portion parallel to the input shaft and a portion extending radially out from the parallel portion.

The gently sloping roof configuration of the outer surfaces 40Aa and 40Ba has the following advantages; the driving and driven rotors contact the intermediate friction transmission ring in a line so that control of rotation is exact. If they contacted over an area, there would be a variation in speed of the contacting surfaces across the contacting area making the control of rotation difficult; and surface contact would cause slip between the contacting surfaces resulting in internal frictional losses. Further, when the friction plates are in contact with the surfaces of an intermediate friction ring with the form of a gently sloping roof, forces acting upon the friction ring tend to return the friction ring to the original concentric position, the forces being balanced in the concentric position, due to the gently sloping roof to stabilize the friction ring, as can be seen from Fig. 1. Moreover, the configuration of the gentle slope roof serves to maintain the intermediate friction transmission ring perpendicular to the input shaft.

The operation of the device constructed as above described according to the invention will be explained hereinafter.

When the handle 7 is rotated in a direction shown by an arrow A in Fig. 2, the intermediate friction transmission ring 40 assumes the position shown in Figs. 1 and 3. In this position, the intermediate friction transmission ring 40 is concentric to the driving and driven rotors 33 and 27 so that the ring 40 contacts these rotors 33 and 37 along a complete circle. Therefore, when the driving rotor 33 is rotated, the driven rotor 27 is rotated in unison through the intermediate friction transmission ring 40 without any sliding therebetween.

When the input shaft 10 is rotated in a direction shown by an arrow C in Fig. 3, the driven rotor 27 is also rotated together with the input shaft 10 in the direction C through the intermediate friction transmission ring 40 so that the internal gear 25, which is connected to the driven rotor 27, is also rotated in unison. The planetary carrier 11, which is connected to the input shaft 10, is rotated in the same manner, so that the respective planet gears 23 rotate in unison with the input shaft 10. As a result, the sun gear 16, which meshes with the planet gears 23, also rotates with the output shaft 15 in unison with the input shaft 10. In this case, therefore, the rotation ratio between the input and output shafts 10 and 15 is 1:1. The stepless speed change device is in its lowest speed ratio.

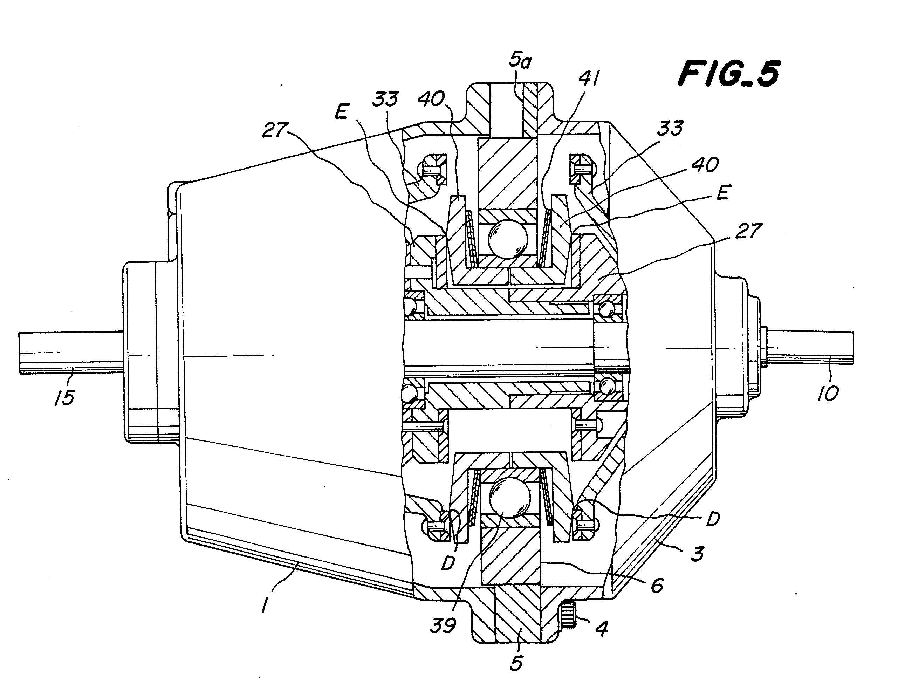

From this fastest transmission condition, when the handle 7 is then rotated through 90° in a direction shown by an arrow B in Fig. 2, the eccentric ring 6 assumes a position shown in Figs. 4 and 5 and therefore the intermediate friction transmission ring 40 is moved to be eccentric to the driving and driven rotors 33 and 27 as shown in Figs. 4 and 5. As a result, contact between the intermediate friction transmission ring 40 and the friction plates 33Aa, 33Ba and 27Ac, 27Bc on the driving and driven sides occurs only in the proximity of points D and E. Under this condition, when the input shaft 10 is rotated in the direction shown by the arrow C in Fig. 4, the intermediate friction transmission ring 40 is also rotated together with the driven rotor 27 in the direction C. In this case, however, there are differences in rotating radius at the contacting points D and E between the intermediate friction transmission ring 40 and the driving and driven rotors 33 and 27.

$R_1$ is the radius from the center $O_1$ of the input shaft 10 and the driving and driven rotors 33 and 27 to the point D, $R_1'$ is the radius from the center $O_2$ of the intermediate friction transmission ring 40 to the point D, $R_2$ is the radius from the center $O_1$ to the point E and $R_2'$ is a radius from the center $O_2$ to the point E. In this case, these radii are in the relation $R_1 > R_1'$, $R_2 > R_2'$. Therefore, the intermediate friction transmission ring 40 rotates with a higher speed than the driving rotor 33, while the driven rotor 27 rotates with a higher speed than the intermediate friction transmission ring 40. In other words, the rotation of the input shaft 10 is transmitted to the driven rotor 27 through the driving rotor 33 and the intermediate friction transmission ring 40 and the rate of rotation increases at the friction transmission portions.

In this embodiment, each increase in the transmission ratios is approximately 1.18 so that the total increase in the transmission ratio is of the order of 1.392.

In other words, when the input shaft 10 is rotated through one rotation, the driven rotor 27 rotates through 1.392 rotations. When the driven rotor 27 is rotates at an increased speed, the internal gear 25, which is connected to the driven rotor 27, rotates in a direction shown by arrow F. The planetary carrier 11, which is connected to the input shaft 10, rotates in a direction shown by arrow G at the same speed as that of the input shaft 10, which is slower than the rotating speed of the internal gear 25. Hence, the planet gears 23 revolve in the direction G and at the same time rotate about their axes in the direction shown by arrow H in Fig. 6 to that the sun gear 16, which meshes with the planet gears 23, rotates at a still slower rate.

When the planet gears 23 rotate about their axes in the directions H the planet carrier rotates in the direction G and the sun gear 16 will rotate about its axis in the direction G or I, depending upon the relative speeds of the internal gear F and the planet carrier.

With the device of this embodiment, therefore, the driven rotor 27 is rotated at an increased speed by means of the friction transmission means, and the output shaft 15 is rotated at a speed lower than that of the input shaft 10 by means of the planetary gear. In this embodiment, the reduction ratio is about 2.5. As above mentioned, the ultimately increased transmission ratio is about 1.392. Therefore, the rotation of the output shaft 15 at the lowest speed changing condition relative to the rotation of the planet carrier, but in the opposite sense, is 2.5 times $(1.392-1)$ or $(1.392-1) \times 2.5 = 0.98$. In this case, accordingly, the rotation of the output shaft 15 is just above zero.

In this invention, when the handle 7 is set an optional position between the arrows A and B in Fig. 2, any transmission ratio can be obtained between the highest and lowest speeds. Moreover, by suitably setting the speed-up ratio of the driven rotor or reduction ratio of the planetary gear, the range of transmission ratios can be set as appropriate.

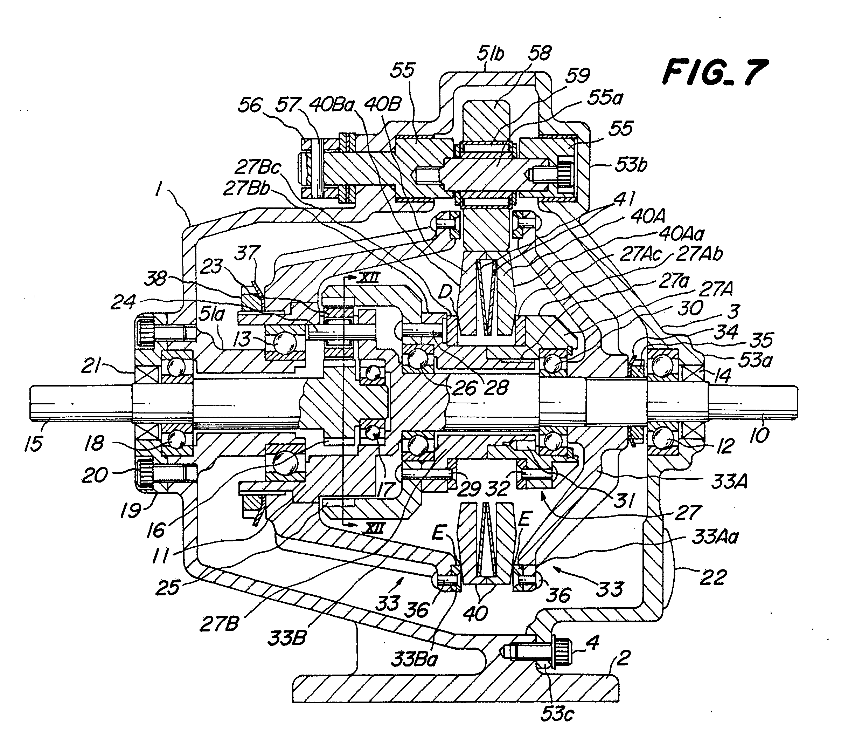

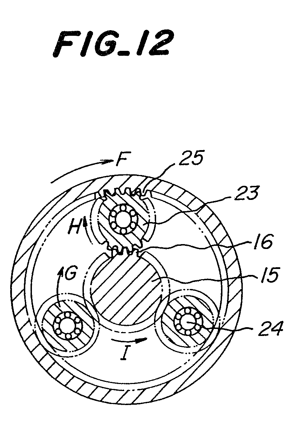

Another embodiment of the invention will be explained with reference to Figs. 7-12, wherein like numerals denote like parts of Figures 1-6. In order to avoid duplication of explanation, similar or substantially similar components will not be described in further detail.

The stepless speed change device in this embodiment comprises a casing 1 substantially in the form of a hollow cylinder which is opened on an input side and has a boss 51a on an output side for a shaft to pass through. The casing 1 has integrally formed guide roller receiving portions 51b in the form of vertically divided cylinders. The casing 1 has an integral base 2 and is covered by a casing cover 3 which is clamped to the casing 1 by means of bolts 4. The casing cover 3 has a boss 53a on an input side for an input shaft to pass through, cover portions 53b for the guide roller receiving portions 51b and a flange 53c for clamping the casing cover 3 to the casing 1.

An eccentric shaft 55 is rotatably mounted between the guide roller receiving portions 51b and the cover portion 53b for each of the guide rollers. The eccentric shaft 55 is provided with an eccentric portion 55a, and a handle 56 connected to a projection of the eccentric shaft 55 by means of a pin 57. A guide roller 58 is rotatably mounted on a bearing 59 fitted on the eccentric portion 55a of the eccentric shaft 55.

Instead of the eccentric ring 6 used in the first embodiment, the two guide rollers 58 are used which are arranged so as to contact the intermediate friction transmission ring 40 which is substantially the same in construction as in the first embodiment.

In this embodiment, the construction and operation of the side rings 40A and 40B are substantially the same as in the first embodiment.

The operation of the device constructed as above described according to the second embodiment of the invention will be explained hereinafter.

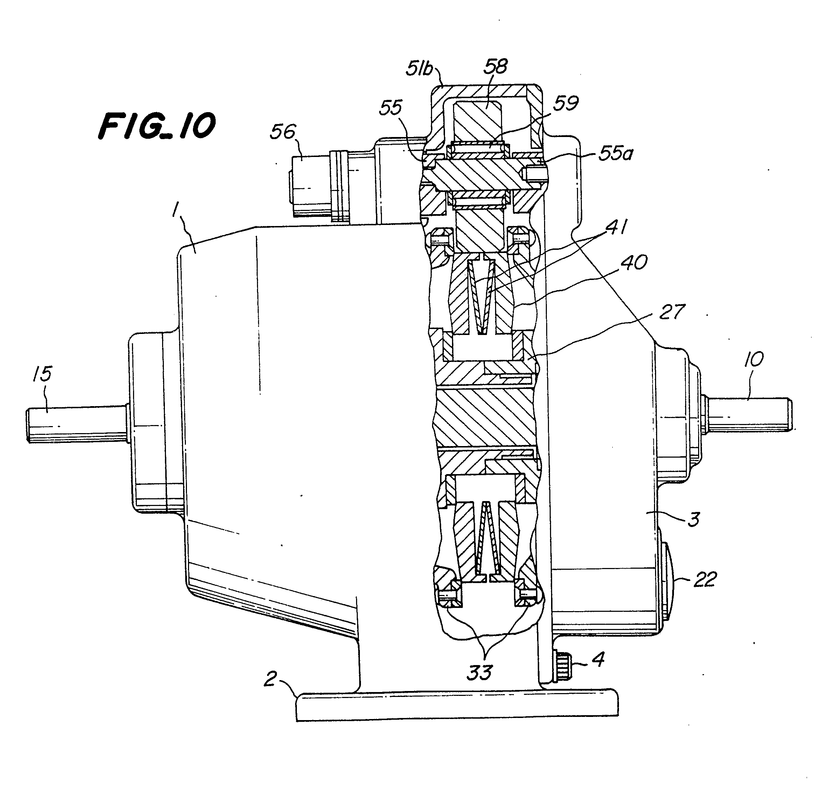

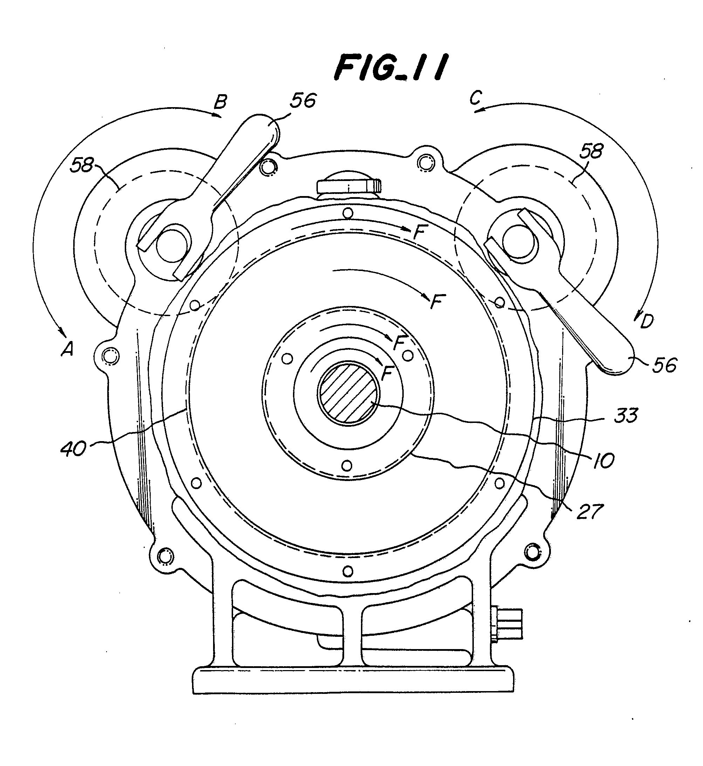

When the handles 56 are rotated in directions shown by arrows B and D in Fig. 11, the intermediate friction transmission ring 40 assumes the position shown in Figs. 10 and 11. In this position, the intermediate friction transmission ring 40 is concentric to the driving and driven rotors 33 and 27 so that the ring 40 contacts these rotors 33 and 27 around a complete circle. Therefore, when the driving rotor 33 is rotated, the driven rotor 27 is rotated in unison via the intermediate friction transmission ring 40 without any slip.

Accordingly, when the input shaft 10 is rotated in a direction shown by an arrow C in Fig. 11, the driven rotor 27 is also rotated in the direction F together with the input shaft 10 via the intermediate friction transmission ring 40 so that the internal gear 25 connected to the driven rotor 27 is also rotated in unison. On the other hand, the planetary carrier 11 which is connected to the input shaft 10 is rotated in the same manner, so that the respective planet gears 23 are revolved in unison with the input shaft 10. As a result, the sun gear 16 in mesh with these planet gears 23 is also rotated together with the output shaft 15 in unison with the input shaft 10. In this case, therefore, the rotation ratio between the input and output shafts 10 and 15 is 1:1. In this situation the transmission is in its highest speed.

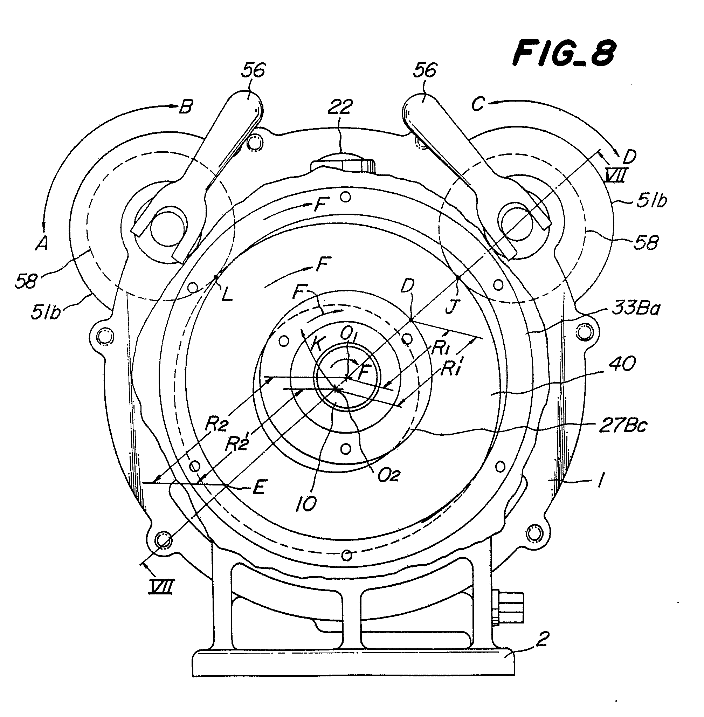

From this condition, when the handle 56 on the right side, shown in Fig. 8, is then rotated through about 180° in a direction shown by an arrow C in Fig. 8, the guide roller 58 on the right side assumes a position shown in Fig. 8 and therefore the intermediate friction transmission ring 40 is moved to be eccentric to the driving and driven rotors 33 and 27 as shown in Figs. 7 and 8. As a result, contact between the intermediate friction transmission ring 40 and the friction plates 33Aa, 33Ba and 27Ac, 27Bc on the driving and driven sides only occurs in the proximity of points D and E. In this condition, when the input shaft 10 is rotated in the direction shown by the arrow F in Fig. 8, the intermediate friction transmission ring 40 is also rotated together with the driven rotor 27 in the direction F. In this case, however, there are differences in rotating radius at the contacting points D and E between the intermediate friction transmission ring 40 and the driving and driven rotors 33 and 27.

Let $O_1$ be the centre of the input shaft 10 and the driving and driven rotors 33 and 27. $O_2$ is the centre of the intermediate friction transmission ring 40. Let $R_1$ be the distance between $O_1$ and D, $R_1$ be the distance between $O_2$ and D, $R_2$ the distance between $O_1$ and E, and $R_2$ the distance between $O_2$ and E. In this case, these distances are in a relation $R_1 < R_1'$, $R_2 > R_2'$. Therefore, the intermediate friction transmission ring 40 rotates with a higher speed than the driving rotor 33, while the driven rotor 27 rotates with a higher speed than the intermediate friction transmission ring 40. In other words, the rotation of the input shaft 10 is transmitted to the driven rotor 27 through the driving rotor 33 and the intermediate friction transmission ring 40 at a speed which increases at each friction transmission portions.

In this embodiment, each increase in transmission ratios is a factor of approximately 1.18 so that the total increase in transmission ratio is of the order of 1.392 in the same manner as in the first embodiment.

With the device of this embodiment, therefore, in the same manner as in the first embodiment, the driven rotor 27 is rotated at an increased speed by means of the friction transmission means, and the output shaft 15 is rotated at a speed lower than that of the input shaft 10 by means of the planetary gear. In this embodiment, the reduction ratio is about 2.5. As above mentioned, the ultimately increased transmission ratio is about 1.392. In this case also, accordingly, the rotation of the output shaft 15 is just above zero.

In the second embodiment, when the handle 56 is set an optional position between the arrows C and D in Fig. 8, any transmission ratio can be obtained between the fastest and lowest ratios. Moreover, by suitably setting the speed-up ratio of the driven rotor or reduction ratio of the planetary gear, any range of transmission ratios can be selected.

The positioning of the intermediate friction transmission ring 40 by means of the guide rollers 58 will be explained herein. In case of the input shaft being rotated in the direction F in Fig. 8, the intermediate friction transmission ring 40 tends to rotate in a direction shown by an arrow K about a contacting point J between the intermediate friction transmission ring and the guide roller 58 on the right side. The other guide roller 58 is brought into contact with the intermediate friction transmission ring 40 at a point thereby enabling it to rotate about its centre $O_2$.

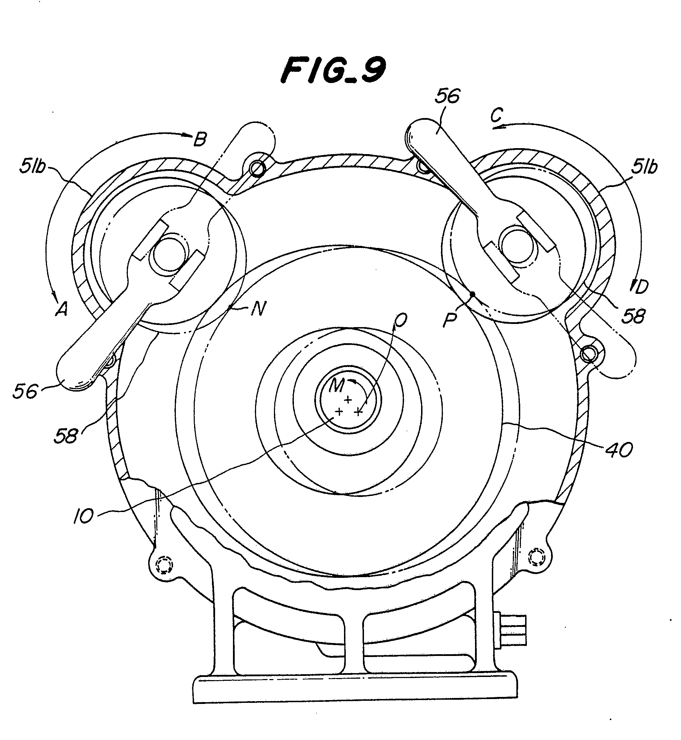

On the other hand, in case of the input shaft being rotated in a reverse direction shown by an arrow M in Fig. 9, the speed change is effected by the operation of the handle 56 on the left side shown in Fig. 9. In this case, the intermediate friction transmission ring 40 tends to rotate in a direction shown by an arrow O about a contacting point N between the intermediate friction transmission ring and the guide roller 58 on the left side, but the rotation of the intermediate friction transmission ring 40 is made stable be bringing the other guide roller 58 into contact with the intermediate friction transmission ring 40 at a point P.

Therefore, optional transmission ratios can be obtained by operating either one of the handles 56.

As can be seen from the above explanation, according to the invention, the intermediate friction transmission ring capable of adjusting its eccentricity relative to the input shaft by the eccentric ring or two sets of guide rollers is provided between the driving rotor consisting of two members rotating together with the input shaft and the driven rotor provided rotatably relative to the driving rotor without using any conical wheels for friction transmission. The friction transmission is accomplished by engagements of these members. In the fastest speed range, since the driving and driven rotors concentrically contact the intermediate friction transmission ring, the respective rotors contact the ring with all the circumferences thereof, with the result that very high transmission efficiency approximately 100% can be obtained without slipping.

Moreover, even in speed ranges other than the fastest speed range, wherein the intermediate friction transmission ring is eccentric to the input shaft so that the driving and driven rotors partially contact the intermediate friction transmission, the ratio of pitch line diameters of the driving and driven rotors is larger than 1:2. Therefore, fairly long friction transmission lines on the pitch lines are accomplished and positive and negative slipping zones on both sides of the pitch lines become narrower. Therefore, fairly high transmission efficiency can be accomplished in the speed ranges other than the fastest speed range.

Accordingly, the invention has the advantage enabling to improve the transmission efficiency as the stepless speed change device.

Furthermore, the device according to the invention is simple in construction, easy to manufacture and light and small-sized.

It is to be understood that the device of this invention may also operate in reverse, i.e. the output side may be driven and the output taken from the input, as desired.

## Claims

1. A stepless speed change device having an input shaft and an output shaft, said device comprising a planetary gear set comprising carrier provided at an inner end of said input shaft, a sun gear provided at an inner end of said output shaft meshing with planet gears carried on the planetary carrier, and an internal gear meshing with the planet gears, a driven rotor rotatable about said input shaft and in the form of a hollow cylinder having flanges at both ends and concentrically connected to said internal gear, a driving rotor enclosing said driven rotor and including two members connected to said input shaft on both sides of said driven rotor, and an intermediate friction transmission ring interposed between said flanges of the driven rotor and between said two members of the driving rotor for transmission rotating power therebetween, the eccentricity of the intermediate friction transmission gear being adjustable to vary the speed of rotation of the driven rotor relative to that of the driving rotor to vary the speed ratio between the input shaft and the output shaft.

2. A stepless speed change device as set forth in claim 1, wherein said intermediate friction transmission ring is fitted in an eccentric inner aperture in a control ring, thereby enabling the eccentricity of the intermediate friction transmission ring to be adjusted by rotating the control ring.

3. A stepless change device as set forth in claim 1, wherein at least one guide roller means is provided on an outer side of the intermediate friction transmission ring, said guide roller means comprising an eccentric shaft having an eccentric portion, eccentric shaft rotating means for rotating the eccentric shaft from outside of the device, and a guide roller fitted on a bearing mounted on the eccentric portion of the eccentric shaft, thereby enabling the eccentricity of the intermediate friction transmission ring to be adjusted by rotating the eccentric shaft by said eccentric shaft rotating means.

4. A stepless speed change device according to any preceding claim, wherein said intermediate friction transmission ring comprises an input side ring and an output side ring, whose longitudinal sectional shape in a plane including a diameter on one side of the input shaft is an L-shaped form having a portion in parallel with the input shaft and a portion extending radially inwardly from the first mentioned portion, and spring means for urging said input and output side rings away from each other in an axial direction of the input shaft.

5. A stepless speed change device according to any preceding claim, wherein each of surfaces of said intermediate friction transmission ring on which the driving and driven rotors contact is formed in a shape of a gently sloping roof in section.

6. A stepless speed change device according to any preceding claim, wherein said driven rotor comprises an input side driven rotating member and an output side rotating member, and friction plates are provided on insides of both the flanges of the driven rotor.

7. A stepless speed change device according to any preceding claim, wherein the one member of the driving rotor on the side of the input shaft is connected to the input shaft and the other member on the side of the output shaft is connected to the planetary carrier, and friction plates are provided on surfaces of both the members in opposition to the intermediate friction transmission ring.

FIG_1

FIG_2

EP 0 332 414 A2

# FIG_3

# FIG_4

FIG.5

EP 0 332 414 A2

# FIG_6

FIG. 7

EP 0 332 414 A2

FIG. 8

FIG.9

FIG.10

EP 0 332 414 A2

FIG. 11

# FIG_12